# EUROPEAN PATENT APPLICATION

(11) **EP 2 301 350 A1**
(43) Date of publication of application: **30.03.2011**
(21) Application number: 09170440.3
(22) Date of filing: 16.09.2009
(51) Int. Cl.: A01N 43/56, A01N 43/40, A01P 15/00

(54) **Use of succinate dehydrogenase inhibitors for increasing the content of desired ingredients in crops**

(71) Applicant: Bayer CropScience AG, 40789 Monheim (DE)
(72) Inventor: The designation of the inventor has not yet been filed

(57) **Abstract**

The present invention relates to the use of succinate dehydrogenase Inhibitors for increasing the content of desired ingredients in crops, such as fruits and vegetables and to a method for increasing the content of desired ingredients in crops by applying a succinate dehydrogenase inhibitor to the crops prior to the harvest of the crop or of its fruits or vegetables.

## Description

The present invention relates to the use of succinate dehydrogenase Inhibitors for increasing the content of desired ingredients in crops, such as fruits and vegetables and to a method for increasing the content of desired ingredients in crops by applying a succinate dehydrogenase inhibitor to the crops prior to the harvest of the crop or of its fruits or vegetables.

Providing for the nutritional well-being of a rapidly growing world population is one of the greatest challenges facing the global human community. In view of limited and decreasing acreages it is necessary to improve the nutritional capacities and the quality of cultivated crops. This goal could be achieved by increasing the content of nutritional ingredients of the crops, such as sugar-, vitamin- , starch- or fat/oil content.

The object underlying the present invention is the provision of a method for increasing the content of desired ingredients in crops.

The problem outlined above has been solved by the use of succinate dehydrogenase inhibitors for increasing the content of desired ingredients in crops.

It has surprisingly been found that the application of succinate dehydrogenase inhibitors during the growing and maturation periods increases the content of desired ingredients in crops or of the fruits and vegetables obtained from those crops.

In conjunction with the present invention *"increasing the content"* means that the treated crop or fruits and vegetables harvested from the treated crop have a higher content of a specific desired ingredient as compared to an untreated crop or to fruits or vegetables obtained therefrom.

*"Desired ingredients"* are all materials which positively a contribute to the economic or nutritional value of a crop or of fruits and vegetables obtained from that crop.

A non-exhaustive enumeration of desired ingredients shall be given subsequently:

*Polyphenols* are a group of chemical substances found in plants, characterized by the presence of more than one phenol unit or building block per molecule. Polyphenols are generally divided into hydrolyzable tannins (gallic acid esters of glucose and other sugars) and phenylpropanoids, such as lignins, flavonoids, and condensed tannins.

*Anthocyanins* are water-soluble vacuolar pigments that may appear red, purple, or blue according to pH. They belong to a parent class of molecules called flavonoids synthesized via the phenylpropanoid pathway. Anthocyanins occur in all tissues of higher plants, including leaves, stems, roots, flowers, and fruits.

*Anthocyanidins* are common plant pigments. They are the sugar-free counterparts of anthocyanins based on the benzopyrylium (chromenylium) ion. They form a large group of polymethine dye. In particular anthocyanidins are salt derivatives of the 2-phenylchromenylium cation, also known as flavylium cation. As shown in the figure below, the phenyl group at the 2-position, can carry different substituents. The counterion of the flavylium cation is mostly chloride. With this positive charge, the anthocyanidins differ from other flavonoids.

*Vegetable fats and oils* are lipid materials derived from plants. Physically, oils are liquid at room temperature, and fats are solid. Chemically, both fats and oils are composed of triglycerides, as contrasted with waxes which lack glycerin in their structure. Although many different parts of plants may yield oil, in commercial practice, oil is extracted primarily from seeds.

Essential fatty acids are polyunsaturated fatty acids and are the parent compounds of the omega-6 and omega-3 fatty acid series, respectively. They are essential in the human diet because there is no synthetic mechanism for them. Humans can easily make saturated fatty acids or monounsaturated fatty acids with a double bond at the omega-9 position, but do not have the enzymes necessary to introduce a double bond at the omega-3 position or omega-6 position. Due to its nutritional value it is desired to increase the unsaturated fatty acid content of crops. More preferably it is desired to increase the content of myristoleic acid, palmitoleic acid, oleic acid, linoleic acid, α-linolenic acid, arachidonic acid, eicosapentaenoic acid, erucic acid and docosahexaenoic acid.

*Sugar* denotes all mono-, di-, oligo- and polysaccharides usually contained in crops. Particularly preferred sugars are starch, glucose, fructose and sucrose.

*Fruit acids* are a group of organic acids that share a common chemical structure consisting of a hydroxyl group positioned at the alpha-carbon position. Consequently, these compounds are often referred to as alpha hydroxy acids. Common fruit acids include lactic and malic acids. Because of the structural configuration of these acids, they are optically active and only certain forms of the isomers are obtained from natural sources.

The sugar/acid ratio contributes towards giving many fruits their characteristic flavour. So it is an indicator of commercial and organoleptic ripeness. At the beginning of the ripening process the sugar/acid ratio is low, because of low sugar content and high fruit acid content, this makes the fruit taste sour. During the ripening process the fruit acids are degraded, the sugar content increases and the sugar/acid ratio achieves a higher value. Overripe fruits have very low levels of fruit acid and therefore lack characteristic flavour.

Thus, it is desirable to maintain a balanced sugar/acid ratio even at the time of harvest of the fruits.

*Vitamins* are organic compounds required as a nutrient in tiny amounts by an organism. A compound is called a vitamin when it cannot be synthesized in sufficient quantities by an organism, and must be obtained from the diet. Thus, the term is conditional both on the circumstances and the particular organism. According to the present invention the vitamin is selected from the group consisting of retinoids and carotenoids (vitamin A), thiamine (vitamin B₁), riboflavin (vitamin B₂), niacin, niacinamide (vitamin B₃), pantothenic acid (vitamin B₅), pyridoxine, pyridoxamine, pyridoxal (vitamin B₆), biotin (vitamin B₇), folic acid, folinic acid (vitamin B₉), ascorbic acid (vitamin C), tocopherols, tocotrienols (vitamin E), phylloquinone,menaquinones (vitamin K).

### Succinate Dehydrogenase Inhibitors

In conjunction with the present invention all active substances (a.s.) which inhibit succinate dehydrogenase in the mitochondrial respiration chain can be used. In a preferred embodiment of the present invention the succinate dehydrogenase inhibitor is selected from the group consisting of fluopyram, isopyrazam, boscalid, penthiopyrad, penflufen, sedaxan and bixafen or mixtures thereof. In a most preferred embodiment of the present invention the succinate dehydrogenase inhibitor is fluopyram.

Fluopyram having the chemical name N-{[3-chloro-5-(trifluoromethyl)-2-pyridinyl]ethyl}-2,6-dichlorobenzamide is a fungicide belonging to the chemical class of pyridylethylbenzamides. Fluopyram and its manufacturing process starting from known and commercially available compounds is described in EP-A- 1 389 614.

Penflufen having the chemical name N-[2-(1,3-dimethylbutyl)phenyl]-5-fluoro-1,3-dimethyl-1H-pyrazole-4-carboxamide and its manufacturing process starting from known and commercially available compounds is described in WO 03/010149.

Bixafen having the chemical name N-(3',4'-dichloro-5-fluoro-1,1'-biphenyl-2-yl)-3-(difluoromethyl)-1-methyl-1H-pyrazole-4-carboxamide (Compound I-2) and its manufacturing process starting from known and commercially available compounds is described in WO 03/070705.

Sedaxane is the mixture of 2 cis-isomers 2*'*-[(1RS,2RS)-1,1*'*-bicycloprop-2-yl]-3-(difluoromethyl)-1-methylpyrazole-4-carboxanilide and 2 trans-isomers 2*'*-[(lRS,2SR)-1,1*'*-bicycloprop-2-yl]-3-(difluoromethyl)-1-methylpyrazole-4-carboxanilide. Sedaxane and its manufacturing process starting from known and commercially available compounds is described in WO 03/074491, WO 2006/015865 and WO 2006/015866.

Isopyrazam is the mixture of 2 syn-isomers 3-(difluoromethyl)-1-methyl-N-[(1RS,4SR,9RS)-1,2,3,4-tetrahydro-9-isopropyl-1,4-methanonaphthalen-5-yl]pyrazole-4-carboxamide and 2 anti-isomers 3-(difluoromethyl)-1-methyl-N-[(1RS,4SR,9SR)-1,2,3,4-tetrahydro-9-isopropyl-1,4-methanonaphthalen-5-yl]pyrazole-4-carboxamide. Isopyrazam and its manufacturing process starting from known and commercially available compounds is described in WO 2004/035589.

Penthiopyrad having the chemical name (RS)-N-[2-(1,3-dimethylbutyl)-3-thienyl]-1-methyl-3-(trifluoromethyl)pyrazole-4-carboxamide and its manufacturing process starting from known and commercially available compounds is described in EP-A-0 737 682.

Boscalid having the chemical name 2-chloro-N-(4'-chlorobiphenyl-2-yl)nicotinamide and its manufacturing process starting from known and commercially available compounds is described in DE-A 195 31 813.

3-(Difluoromethyl)-1-methyl-N-(3',4',5'-trifluorobiphenyl-2-yl)-1H-pyrazole-4-carboxamide and its manufacturing process starting from known and commercially available compounds is described in WO 2006/087343.

In a preferred embodiment of the invention the succinate dehydrogenase inhibitor is fluopyram.

The use/method according to the present invention can be applied to any kind of crops or fruits and vegetables obtained therefrom.

Examples for crops which can be treated according to the present invention are selected from the group consisting of cotton; flax; vine; fruit or vegetable crops such as Ericaceae sp., including instance cranberry, blueberry, bilberry and huckleberry; *Brassicaceae sp. (for instance* cabbage, broccoli, cauliflower, turnip, Chinese cabbage, Brussels sprouts, rapeseed, canola, radish and horseradish), *Prunaceae sp. (Amygdalaceae)* including plum, cherry, apricot, peach, and almond; *Maloideae sp. (Pomoideae)* including apple, pear, quince, rowan, loquat; *Ribesioidae sp., Juglandaceae sp., Betulaceae sp., Anacardiaceae sp.* (for instance mango, sumac, marula and pistachio), *Fagaceae sp., Moraceae sp., Oleaceae sp., Actinidaceae sp., Lauraceae sp., Musaceae sp.* (for instance banana and plantin*s*), *Rubiaceae sp. including coffee and borojo, Theaceae sp., Sterculiceae sp., Rutaceae sp.* (for instance lemons, lime, oranges and *grapefruit) ; Liliaceae sp., Asteraceae sp.* (for instance lettuces), *Umbelliferae sp., Cruciferae sp., Chenopodiaceae sp., Cucurbitaceae sp.* (for instance melons, gourds, cucurbits, cucumbers, squashes, pumpkins, winter squash, luffas, melons and watermelons), *Papilionaceae sp.* (for instance peas), *Rosaceae sp.* (for instance strawberries, blackberry, raspberry, boysenberry) ; major crops such as *Graminae sp.* (for instance maize, lawn or cereals such as wheat, rye, rice, barley and triticale), *Asteraceae sp.* (for instance sunflower), *Cruciferae sp.* (for instance colza), *Fabacae sp.* (for instance peanuts), *Papilionaceae sp.* (for instance soybean), *Solanaceae sp.* (for instance potatoes, eggplant, capsicum, paprika, chili pepper, potato, tobacco), *Chenopodiaceae sp.* (for instance beetroots, spinach, chard); sugarcane *(Saccharum spp.),* sugar beets *(Beta vulgaris),* date palm *(Phoenix dactylifera),* sorghum *(Sorghum vulgare)* and sugar maple *(Acer saccharum),* alfalfa, yerba mate, borojo, cocoa tea, green bean, fig, pineapple ,hedge apple, mulberry, kiwifruit, guava, lucuma, pomegranate, blackcurrant, redcurrant, gooseberry, papaya, globe artichokes, sweetcorn, kale, collard greens, beet greens, turnip greens, endive; leeks, celery, rhubarb, asparagus, ginger; Jerusalem artichokes, sweet potato, yam bean sprouts, carrots, parsnips, beets,, turnips, onions, garlic, shallots, palm, soybean, cotton seed, palm kernel, corn, sunflower seed, peanut , coconut, hazelnut, walnut and other nuts, linseed, rice, sesame, canola and olive horticultural and forest crops; as well as genetically modified homologues of these crops.

Examples for fruits are banana, blackcurrant, redcurrant, gooseberry, tomato, eggplant, guava, lucuma, chili pepper, pomegranate, kiwifruit, grape, table grapes, pumpkin, gourd, cucumber, melon, orange, lemon, lime, grapefruit, banana, cranberry, blueberry, blackberry, raspberry, boysenberry, hedge apple, pineapple, date, fig, mulberry, apple, apricot, peach, cherry, green bean, sunflower seed, strawberry and plum.

Examples for vegetables *are flower buds,* such as: broccoli, cauliflower, globe artichokes; *seeds,* such as sweetcorn also known as maize; *leaves, such as* kale, collard greens, spinach, beet greens, turnip greens, endive; *leaf sheaths,* such as leeks; *buds,* such as Brussels sprouts; *stems of leaves,* such as celery, rhubarb; *stem of a plant* when it is still a young shoot, such as asparagus, ginger; *underground stem of a plant,* also known as a *tuber,* such as potatoes, Jerusalem artichokes, sweet potato, yam; *whole immature plants,* such as bean sprouts; *Roots, such as* carrots, parsnips, beets, radishes, turnips; *bulbs,* such as onions, garlic, shallots.

In conjunction with the present invention the terms "crops" and "plants" can be used interchangeably, both encompass fruits and vegetables obtainable from those crops or plants.

The use/method according present invention can be employed for increasing the oil or fat content of palm, soybean, rapeseed, cotton seed, palm kernel, corn, sunflower seed, peanut, coconut, hazelnut, walnut and other nuts, linseed, rice, sesame and olive.

Moreover, it has been found that the treatment of palm, soybean, rapeseed, cotton seed, palm kernel, corn, sunflower seed, peanut, coconut, hazelnut, walnut and other nuts, linseed, rice, sesame and olive plants, increases their unsaturated fatty acid content. Particularly their content of myristoleic acid, palmitoleic acid, oleic acid, linoleic acid, α-linolenic acid, arachidonic acid, eicosapentaenoic acid, erucic acid and docosahexaenoic acid is increased.

Likewise, the use/method according present invention can be employed for increasing the polyphenol content of crops, particularly the content of tannins, lignins and flavonoids, such as flavonols, flavones, catechins, flavanones, anthocyanidins isoflavonoids and quercetin of berries, such as cranberry, blueberry, bilberry and huckleberry, blackcurrant, redcurrant, gooseberry; tea, grapes/wine, olive, cocoa, coffee, walnuts, peanuts, borojo, pomegranates and yerba mate.

In another embodiment the use/method according present invention can be employed for increasing the sugar content of crops. More particularly the invention can be used to increase
■ the sucrose content, of sugarcane *(Saccharum spp.),* sugar beets *(Beta vulgaris),* date palm *(Phoenix dactylifera),* sorghum *(Sorghum vulgare)* and sugar maple *(Acer saccharum);*
■ the starch content of maize, rice, wheat, cassava (maniok), corn husk and sago;
■ the glucose content of apple, apricot, banana, grapes, peach, pear, beet(red), carrot, corn (sweet), red pepper, sweet onion, sweet potato, yam, sugarcane and sugar beet.
■ the fructose content of apple, apricot, banana, grapes, peach, pear, beet(red), carrot, corn (sweet), red pepper, sweet onion, sweet potato, yam, sugarcane and sugar beet.

In a further embodiment of the invention the use/method according present invention can be employed for increasing the vitamin content of crops.

More particularly, the present invention can be used for increasing the content of
■ retinoids and carotenoids (vitamin A) in sweet potato, carrot, broccoli, kale, spinach, leafy vegetables, pumpkin, collard greens, cantaloupe melon, apricot, papaya, mango, pea, broccoli, winter squash;
■ thiamine (vitamin B₁) in oat, flax ,sunflower seeds, rice, rye, asparagus, kale, cauliflower, potatoes and oranges;
■ riboflavin (vitamin B₂) in asparagus, bananas, persimmons, okra, chard;
■ niacin, niacinamide (vitamin B₃) in avocados, dates, tomatoes, leaf vegetables, broccoli, carrots, sweet potatoes, asparagus;
■ pantothenic acid (vitamin B₅) in broccoli, avocados rice, wheat, alfalfa, peanut;
■ pyridoxine, pyridoxamine, pyridoxal (vitamin B₆) in cereals and nuts;
■ biotin (vitamin B₇) in legumes, soybeans, swiss chard, tomatoes, romaine lettuce, carrots, almonds, onions, cabbage, cucumber, cauliflower, raspberries, strawberries, oats, walnuts, oilseed meals, alfalfa;
■ folic acid, folinic acid (vitamin B₉) in spinach, asparagus, turnip greens, lettuces, dried or fresh beans and peas, fortified cereal products, sunflower seeds;
■ ascorbic acid (vitamin C) in Indian gooseberry, blackcurrant, red pepper, parsley, guava, kiwifruit, passion fruit;
■ tocopherols, tocotrienols (vitamin E) in asparagus, avocado, nuts, such as almonds or hazelnuts, palm oil, seeds, spinach and other green leafy vegetables, canola, corn, sunflower, soybean, cottonseed, olive oil, rice, wheat, cereals
■ phylloquinone,menaquinones (vitamin K) in soybean spinach, swiss chard, parsley and *Brassica (e.g.* cabbage, kale, cauliflower, broccoli, and brussels sprouts); fruits such as avocado and kiwifruit.

The succinate dehydrogenase inhibitors, preferably fluopyram, can be employed for increasing the content of desired ingredients in crops within a certain period of time after the treatment of the crops or after treating the fruits or vegetables itself. Generally, the succinate dehydrogenase inhibitor is applied to the crop or to its fruits or vegetables prior to the harvest, more preferably prior to the maturation of fruits and vegetables, most preferably during the plant and fruit growth.

The period of time within which an increase of the desired ingredients is effected generally extends from 1 hour to 6 months, preferably from 1 week to 1 month after the treatment of the crops or its fruits or vegetables with the active compounds.

When employing the succinate dehydrogenase inhibitors, preferably fluopyram, according to the present invention for increasing the content of desired ingredients in crops, the application rates can be varied within a broad range, depending on the type of application. For foliar applications the application rates of active compound are generally ranging from 1 to 250 g/ha, more preferably from 25 to 200 g/ha, most preferably from 30 to 150 g/ha based upon the pure a.s. (active substance).

According to the present invention the succinate dehydrogenase inhibitor, preferably fluopyram, can be applied to all parts of the plants such as shoot, leaf, flower and root, leaves, needles, stalks, stems, flowers, vegetative buds and flower buds fruiting bodies and fruits.

Plants are understood as meaning, in the present context, all plants and plant populations, such as desired and undesired wild plants or crop plants (including naturally occurring crop plants). Crop plants or crops may be plants which can be obtained by conventional breeding and optimization methods or else by biotechnological and genetic engineering methods or by combinations of these methods, including the transgenic plants and including the plant varieties capable or not capable of being protected by plant breeders' rights.

According to the invention the treatment of the plants with the succinate dehydrogenase inhibitors, preferably fluopyram, is carried out directly by the customary treatment methods, for example by immersion, spraying, vaporizing, fogging, injecting, dripping, drenching, broadcasting or painting. In a preferred embodiment of the invention fluopyram is applied by injecting, dripping, drenching or spraying.

The succinate dehydrogenase inhibitors, preferably fluopyram, can be converted to the customary formulations, such as solutions, emulsions, suspensions, powders, foams, pastes, granules, aerosols, very fine capsules in polymeric substances and in coating compositions for seed, and also ULV cold- and warm-fogging formulations.

These formulations are produced in a known manner, for example by mixing the active compounds with extenders, that is liquid solvents, pressurized liquefied gases and/or solid carriers, optionally with the use of surface-active agents, that is emulsifiers and/or dispersants and/or foam formers. If the extender used is water, it is also possible to employ for example organic solvents as cosolvents.

Suitable liquid solvents are essentially: aromatics, such as xylene, toluene or alkylnaphthalenes, chlorinated aromatics or chlorinated aliphatic hydrocarbons, such as chlorobenzenes, chloroethylenes or methylene chloride, aliphatic hydrocarbons, such as cyclohexane or paraffins, for example mineral oil fractions, alcohols, such as butanol or glycol as well as their ethers and esters, ketones, such as acetone, methyl ethyl ketone, methyl isobutyl ketone or cyclohexanone, strongly polar solvents, such as dimethylformamide and dimethyl sulphoxide, and also water. Liquefied gaseous extenders or carriers are those liquids which are gaseous at ambient temperature and at atmospheric pressure, for example aerosol propellants such as halogenated hydrocarbons and also butane, propane, nitrogen and carbon dioxide. As solid carriers there are suitable: for example ground natural minerals, such as kaolins, clays, talc, chalk, quartz, attapulgite, montmorillonite or diatomaceous earth, and ground synthetic minerals, such as finely divided silica, alumina and silicates. As solid carriers for granules there are suitable: for example crushed and fractionated natural rocks such as calcite, pumice, marble, sepiolite and dolomite, and also synthetic granules of inorganic and organic meals, and granules of organic material such as sawdust, coconut shells, maize cobs and tobacco stalks. As emulsifiers and/or foam formers there are suitable: for example non-ionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and protein hydrolysates. As dispersants, for example, lignosulphite waste liquors and methylcellulose are suitable.

Tackifiers such as carboxymethylcellulose and natural and synthetic polymers in the form of powders, granules or latices, such as gum arabic, polyvinyl alcohol and polyvinyl acetate, as well as natural phospholipids, such as cephalins and lecithins, and synthetic phospholipids, can be used in the formulations. Other possible additives are mineral and vegetable oils.

It is possible to use colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc.

The formulations in general contain between 0.1 and 95 per cent by weight of active compounds, preferably between 0.5 and 90 per cent by weight, based upon the total formulation.

According to the present invention, the succinate dehydrogenase inhibitors, preferably fluopyram, as such or their formulations, can also be used as a mixture with known fungicides, bactericides, acaricides, nematicides, or insecticides, for example, to broaden the activity spectrum or prevent the development of resistance. In many instances, synergistic effects are obtained, i.e. the activity of the mixture exceeds the activity of the individual components.

A further embodiment of the invention relates to the use of a composition comprising a succinate dehydrogenase inhibitor, preferably fluopyram, and a second fungicide increasing the content of desired ingredients in crops.

A further embodiment of the present invention pertains to a method for increasing the content of desired ingredients in crops, characterized in that, fluopyram was applied to the crop prior to the harvest of the fruits and vegetables.

## Claims

1. Use of succinate dehydrogenase inhibitors for increasing the content of desired ingredients in crops.

2. Use according to claim 1, wherein the succinate dehydrogenase inhibitor is selected from the group consisting of fluopyram, isopyrazam, boscalid, penthiopyrad, penflufen, sedaxane, bixafen and 3-(difluoromethyl)-1-methyl-N-(3',4',5'-trifluorobiphenyl-2-yl)-1H-pyrazole-4-carboxamide.

3. Use according to any one of claims 1 or 2, wherein the succinate dehydrogenase inhibitor is fluopyram.

4. Use according to any one of claims 1 to 3, wherein the crops are selected from the group consisting of cotton; flax; vine; fruit or vegetable crops such as Ericaceae sp., including instance cranberry, blueberry, bilberry and huckleberry; *Brassicaceae sp.* including cabbage, broccoli, cauliflower, turnip, Chinese cabbage, Brussels sprouts, rapeseed, canola, radish and horseradish; *Prunaceae sp. (Amygdalaceae)* including plum, cherry, apricot, peach, and almond; *Maloideae sp. (Pomoideae)* including apple, pear, quince, rowan, loquat; *Ribesioidae sp., Juglandaceae sp., Betulaceae sp., Anacardiaceae sp.* including mango, sumac, marula and pistachio; *Fagaceae sp., Moraceae sp., Oleaceae sp., Actinidaceae sp., Lauraceae sp., Musaceae sp.* including banana; *Rubiaceae sp.* including coffee and borojo; *Theaceae sp., Sterculiceae sp., Rutaceae sp.* including lemons, lime, oranges and grapefruit; *Liliaceae sp., Asteraceae sp.* including lettuces; *Umbelliferae sp., Cruciferae sp., Chenopodiaceae sp., Cucurbitaceae sp.* including melons, gourds, cucurbits, cucumbers, squashes, pumpkins, winter squash, luffas, melons and watermelons; *Papilionaceae sp.* including peas and soybean; *Rosaceae sp.* including strawberries, blackberry, raspberry, boysenberry; major crops such as *Graminae sp.* including maize, lawn or cereals such as wheat, rye, rice, barley and triticale; *Asteraceae sp.* including sunflower; *Cruciferae sp.* including colza, *Fabacae sp.* including peanuts; *Solanaceae sp.* including potatoes, eggplant, capsicum, paprika, chili pepper, potato, tobacco; *Chenopodiaceae sp.* including beetroots, spinach, chard; sugarcane *(Saccharum spp.),* sugar beets *(Beta vulgaris),* date palm *(Phoenix dactylifera),* sorghum *(Sorghum vulgare)* and sugar maple *(Acer saccharum),* alfalfa, yerba mate, borojo, cocoa tea, green bean, fig, pineapple ,hedge apple, mulberry, kiwifruit, guava, lucuma, pomegranate, blackcurrant, redcurrant, gooseberry, papaya, globe artichokes, sweetcorn, kale, collard greens, beet greens, turnip greens, endive; leeks, celery, rhubarb, asparagus, ginger; Jerusalem artichokes, sweet potato, yam bean sprouts, carrots, parsnips, beets,, turnips, onions, garlic, shallots, palm, soybean, cotton seed, palm kernel, corn, sunflower seed, peanut , coconut, hazelnut, walnut and other nuts, linseed, rice, sesame, canola and olive horticultural and forest crops; as well as genetically modified homologues of these crops.

5. Use according to any one of claims 1 to 4, wherein the desired ingredients are selected from the group consisting of sugars, starch, oil, fat, unsaturated fatty acids, fruit acids, polyphenols, antocyanins and anthocyanidins and vitamins.

6. Use according to claim 5, wherein the sugar is selected from the group consisting of starch, fructose, glucose or sucrose.

7. Use according to claim 5 wherein the vitamine is selected from the group consisting of retinoids and carotenoids (vitamin A), thiamine(vitamin B₁), riboflavin (vitamin B₂), niacin, niacinamide (vitamin B₃), pantothenic acid (vitamin B₅), pyridoxine, pyridoxamine, pyridoxal (vitamin B₆), biotin (vitamin B₇), folic acid, folinic acid (vitamin B₉), ascorbic acid (vitamin C), tocopherols, tocotrienols (vitamin E), phylloquinone,menaquinones (vitamin K).

8. Use according to any one of claims 1 to 5 for increasing the oil/fat content of crops.

9. Use according to any one of claims 1 to 5 for increasing the unsaturated fatty acid content of crops.

10. Use according to claim 9 wherein the unsaturated fatty acids are selected from the group consisting of myristoleic acid, palmitoleic acid, oleic acid, linoleic acid, α-linolenic acid, eicosapentaenoic acid, erucic acid and docosahexaenoic acid.

11. Use according to claim 5, wherein polyphenols are selected from the group consisting of tannins, lignins and flavonoids, such as flavonols, flavones, catechins, flavanones, anthocyanidins isoflavonoids and quercetin.

12. Use according to any one of claims 1 to 11, wherein the succinate dehydrogenase inhibitor was applied to the crop prior to the harvest.

13. Use according to any one of claims 1 to 12, **characterized in that** succinate dehydrogenase inhibitor is applied to the crop at a rate ranging from 1 to 250 g/ha ― based upon the pure a.s.
